# EUROPÄISCHE PATENTSCHRIFT

(11) **EP 1 685 081 B1**
(45) Veröffentlichungstag und Bekanntmachung des Hinweises auf die Patenterteilung: **02.01.2008**
(21) Anmeldenummer: 04791128.4
(22) Anmeldetag: 04.10.2004
(51) Int. Cl.: C04B 41/51, C22C 1/10, F16D 65/12

(54) **VERFAHREN ZUR HERSTELLUNG EINES VERBUNDBAUTEILS UND METALL-KERAMISCHES BAUTEIL**
METHOD FOR PRODUCING A COMPOSITE PART AND METAL/CERAMIC PART
PROCEDE DE PRODUCTION D'UN ELEMENT COMPOSITE ET ELEMENT METAL-CERAMIQUE

(30) Priorität: 27.10.2003 DE 10350035
(43) Veröffentlichungstag der Anmeldung: 02.08.2006
(73) Patentinhaber: ROBERT BOSCH GMBH, 70442 Stuttgart (DE)
(72) Erfinder: REINSCH, Bernd, 71642 Ludwigsburg (DE); POSTLER, Iris, 71229 Leonberg (DE); CZERWINSKI, Klaus, 73574 Iggingen (DE); LEONHARDT, Matthias, 70437 Stuttgart (DE); NAGEL, Alwin, 73430 Aalen (DE); HUCHLER, Bernd, 88454 Hochdorf (DE); STAUDENECKER, Dirk, 73547 Lorch (DE)
(86) Internationale Anmeldenummer: PCT/EP2004/052416
(87) Internationale Veröffentlichungsnummer: WO 2005/042439

(56) Entgegenhaltungen:
- EP-A- 0 859 410
- DE-A- 4 409 377
- DE-A- 10 143 015
- US-A- 5 509 555

## Beschreibung

### Stand der Technik

Die Erfindung geht von einem Verfahren zur Herstellung eines Verbundbauteils gemäß der im Oberbegriff des Patentanspruches 6 näher definierten Art sowie von einem metall-keramischen Bauteil gemäß der im Oberbegriff des Patentanspruchs 1 näher definierten Art aus.

Metall-keramische Bauteile sind aus der Praxis bekannt und können insbesondere bei tribologischen Anwendungen, wie bei Bremsscheiben, zum Einsatz kommen. Derartige Bauteile bestehen aus einem Keramik-Metall-Verbundwerkstoff und verknüpfen Eigenschaftsprofile von metallischen und keramischen Werkstoffen. Einerseits weisen sie, wie Keramiken, eine hohe Verschleiß- und Korrosionsbeständigkeit auf und andererseits sind sie, wie Metalle, durch eine hohe Schadenstoleranz und eine hohe Wärmeleitfähigkeit gekennzeichnet. Darüber hinaus weisen Bauteile aus Keramik-Metall-Verbundwerkstoffen bzw. metall-keramische Bauteile auch bei hohen Temperaturen eine hohe mechanische Stabilität auf.

Keramik-Metall-Verbundwerkstoffe können beispielsweise als sogenannter Cast-Metal-Matrix-Composite (MMC_{cast}), bei welchem während der Herstellung einer zu vergießenden Metallphase bis zu 20 % keramische Fasern oder Partikel beigemischt werden, oder auch als preformbasierter Metall-Matrix-Verbundwerkstoff (MMC_{pref}) ausgebildet sein, wobei letzterer einen keramischen Anteil von gegebenenfalls mehr als 60 % aufweisen kann und damit gegenüber Cast-Metal-Matrix-Composites verschleiß- und korrosionsbeständiger ist.

Bei der Herstellung eines Bauteils aus einem preformbasierten Metall-Matrix-Verbundwerkstoff wird ein poröser keramischer Vorkörper drucklos oder unter Aufbringung eines äußeren Drucks mit einer Metallschmelze infiltriert bzw. befüllt. In Abhängigkeit von dem Schmelzpunkt der zu infiltrierenden Metallphase ist die Infiltrationstemperatur zu wählen, wobei bei bekannten preformbasierten Metall-Matrix-Verbundwerkstoffen eine erwünschte niedrige Infiltrationstemperatur zu einem gleichfalls niedrigen Schmelzpunkt der Metallphase in dem ausgefertigten Bauteil führt.

In der DE 197 06 925 ist ein Verfahren zur Herstellung eines metall-keramischen Verbundwerkstoffes beschrieben. Bei diesem Verfahren wird im Verlauf des Herstellungsprozesses die Schmelztemperatur einer Metallphase erhöht. Dies wird dadurch erreicht, dass ein aus einem Pulver gebildetes Gemisch aus einer Keramik und einer niedrig schmelzenden, eutektischen Metalllegierung, die ein gegenüber der Keramik reaktives Metall umfasst, unter Druck getempert wird, so dass die reaktive Legierungskomponente mit der Keramikphase umgesetzt wird und sich im Verlauf der Temperung die Schmelztemperatur der zurückbleibenden Metallphase erhöht. Dies führt dazu, dass in der Metallphase nur die hochschmelzende, nicht reaktive Metallkomponente der Legierung verbleibt.

Aus der EP 0 859 410 A2 ist ein Verfahren zur Herstellung von Bauteilen aus einem preformbasierten Metall-Matrix-Verbundwerkstoff bekannt. Hierbei wird ein aus Siliziumcarbid gefertigter keramischer Vorkörper durch Anwendung eines Gasdruckinfiltrationsverfahrens mit Kupfer oder einer Kupferlegierung infiltriert. Bei Infiltration der Kupferlegierung liegt der Schmelzpunkt der Metallphase des Verbundbauteils niedriger als bei Infiltration reinen Kupfers, dessen Schmelzpunkt bei 1083 °C liegt. Ein mit reinem Kupfer infiltrierter Verbundwerkstoff zeichnet sich daher durch hohe maximale Einsatztemperaturen aus, die mit dem Schmelzpunkt der Metallphase des Verbundwerkstoffs korreliert sind. Jedoch ist die Herstellung eines solchen Verbundbauteils auch mit hohen Prozesstemperaturen verbunden.

Hohe Prozesstemperaturen führen aber zu einer vermehrten Gaslösung in der Metallschmelze. Dies ist ebenso zu vermeiden wie hohe thermische Belastungen eines zur Infiltration eingesetzten Gießwerkzeugs und des Vorkörpers.

In der US 5,509,555 wird ein Verbundbauteil mit hoher thermischer Leitfähigkeit offenbart, das 20 bis 90 Vol.-% einer Siliziumcarbid-Phase enthält, wobei die Restphase aus Kupfer besteht. In Beispiel 2 wird ferner ein Verbundbauteil, das aus 67 Vol.-% SiC und 33 Vol.-% Cu besteht, aus einer keramischen Kohlenstoff-Vorform hergestellt, die mit einer Legierung infiltriert wird, die 54 at-% Si und 46 at-% Cu enthält.

Die Herstellung eines Verbundbauteils mit hoher Bruchzähigkeit wird in der DE 10143015 A offenbart, wobei zunächst Silizium in eine keramische Vorform aus faserverstärktem Kohlenstoff mit einer Porosität von 10 bis 60 Vol.-% eingebracht wird. Dabei bildet sich eine SiC-Schicht. Anschließend wird eine Cu-Ti-Legierung infiltriert, wobei sich ein Verbundwerkstoff ergibt, der aus Kohlenstoff, reinem Kupfer, TiC und SiC besteht.

### Vorteile der Erfindung

Das erfindungsgemäße Verfahren zur Herstellung eines Verbundbauteils, insbesondere einer Bremsscheibe, mit den Merkmalen nach dem Oberbegriff des Patentanspruches 6, bei welchem Verfahren als Metallschmelze eine Legierung aus Kupfer und mindestens einem weiteren Metall eingesetzt wird, wobei das weitere Metall mit mindestens einem reaktiven Bestandteil des Vorkörpers so umgesetzt wird, dass ein Porenraum einer keramischen Phase von im Wesentlichen reinem Kupfer ausgefüllt wird, hat den Vorteil, dass die Metallschmelze bei Prozesstemperaturen infiltriert werden kann, die niedriger sind als die Schmelztemperatur von Kupfer, und dass das resultierende Verbundbauteil als Metallphase im Wesentlichen reines Kupfer aufweist, so dass die maximale Einsatztemperatur des resultierenden Bauteils in dem Bereich der Schmelztemperatur von Kupfer, d. h. im Bereich von 1083 °C, liegen kann. Die im Vergleich zur Infiltration von reinem Kupfer niedrigeren Infiltrationstemperaturen bei dem erfindungsgemäßen Verfahren führen unter anderem wegen kürzerer Aufheizphasen zu kürzeren Prozesszeiten und damit auch zu geringeren Herstellungskosten. Des Weiteren ist die thermische Belastung eines eingesetzten Gießwerkzeugs und des Vorkörpers geringer. Auch sind geringere Mengen an Gas in der Metallschmelze gelöst.

Das Verfahren nach der Erfindung eignet sich insbesondere zur Herstellung von Bauteilen, die für tribologische Anwendungen ausgelegt sind. Beispielsweise können nach dem Verfahren Bremsscheiben eines Kraftfahrzeuges hergestellt werden, deren maximale Einsatztemperatur zweckmäßigerweise höher als 800 °C liegt. Dies ist bei einem Metall-Keramik-Verbundbau-teil, dessen Metallphase im Wesentlichen aus reinem Kupfer besteht, gegeben.

Ein nach dem erfindungsgemäßen Verfahren hergestelltes Verbundbauteil zeichnet sich durch eine hohe Verschleiß- und Korrosionsbeständigkeit, eine große Schadenstoleranz und eine hohe Wärmeleitfähigkeit aus.

Bei einer bevorzugten Ausführungsform des Verfahrens nach der Erfindung wird die Metallschmelze bei einer Temperatur infiltriert, die zwischen etwa 680 °C und etwa 1000 °C liegt.

Die Infiltration der Metallschmelze erfolgt insbesondere unter einem Druck zwischen etwa 100 bar und etwa 300 bar, wobei zur Vermeidung einer Lunkerbildung durch Schrumpfungen nach der Infiltration für eine Zeitdauer von etwa 1 min bis 5 min ein Nachdruck von etwa 300 bar bis 700 bar auf den infiltrierten Vorkörper ausgeübt werden kann.

Um ein Verbundbauteil zu erhalten, das sich durch ein im Vergleich zu einem mit reinem Kupfer infiltrierten Vorkörper geringeres Gewicht auszeichnet, wird vorzugsweise eine Metalllegierung infiltriert, bei der das weitere Metall ein geringeres spezifisches Gewicht als Kupfer aufweist. Beispielsweise wird als Legierung eine CuMg-Legierung, eine CuAl-Legierung, eine CuSi-Legierung, eine CuZr-Legierung oder eine CuTi-Legierung eingesetzt. Bei all diesen Legierungen handelt es sich um Legierungen, deren Schmelzpunkt unterhalb des Schmelzpunkts von reinem Kupfer liegt.

Die reaktiven Bestandteile des Vorkörpers können aus mindestens einem Oxid, insbesondere aus TiO₂ und/oder ZrO₂, aus mindestens einem Karbid und/oder mindestens einem Nitrid gebildet sein.

Die Umsetzung des weiteren Legierungselements und der reaktiven keramischen Verbindung kann entweder während der Infiltration der Metallschmelze, d. h. in situ, oder bei einer gesteuerten Nachtemperung erfolgen. In letzterem Fall sollten die Infiltrationsbedingungen so gesteuert werden, dass eine teilweise Anreaktion im Oberflächenbereich der reaktiven keramischen Verbindung erfolgt und somit die Infiltration erleichtert wird. Wie auch bei einer Umsetzung während der Infiltration führt die chemische Reaktion zu einer Verringerung des Infiltrationsdrucks. Dies ist durch die freigesetzte Reaktionswärme bzw. die veränderte Oberflächenspannung aufgrund der durch die Umsetzung neu gebildeten Phase bedingt.

Bei einer besonders vorteilhaften Ausführungsform des Verfahrens nach der Erfindung wird dem Vorkörper eine Porosität von etwa 50 Vol.-% verliehen, so dass gute Reaktionsbedingungen für die Umsetzung des gegenüber Kupfer leichteren Legierungselements gegeben sind. Dies führt zu einer geringeren Gesamtdichte des ausgefertigten Materials.

Der Vorkörper kann derart hergestellt werden, dass er Bestandteile umfasst, die gegenüber der Metallschmelze inert sind und die insbesondere aus Partikeln oder Fasern bestehen, die aus einem Oxid, einem Carbid, einem Nitrid oder einem Borid gebildet sind. Bei einem Oxid handelt es sich beispielsweise um Aluminiumoxid Al₂O₃ oder Zirkoniumdioxid ZrO₂, bei einem Carbid beispielsweise um Siliziumcarbid SiC, Titancarbid TiC, Wolframcarbid WC oder Borcarbid B₄C, bei einem Nitrid beispielsweise um Siliziumnitrid Si₃N₄, Bornitrid BN, Aluminiumnitrid AlN, Zirkoniumnitrid ZrN oder Titannitrid TiN, und bei einem Borid beispielsweise um Titanborid TiB₂. Die inerten Bestandteile können insbesondere als Verstärkungs- und/oder Funktionselemente für das ausgefertigte Verbundbauteil dienen. So erhöhen beispielsweise Siliziumkarbid oder Aluminiumnitrid die Wärmeleitfähigkeit des ausgefertigten Werkstoffs. Keramikfasern erhöhen die Festigkeit und die Bruchzähigkeit des ausgefertigten Werkstoffs.

Die Erfindung hat auch ein metall-keramisches Bauteil, insbesondere eine Bremsscheibe zum Gegenstand. Das Bauteil umfasst eine keramische Phase, die mit einem Porenraum versehen ist, der im Wesentlichen mit reinem Kupfer befüllt ist. Erfindungsgemäß umfasst die keramische Phase ein Umsetzungsprodukt aus einem reaktiven Keramikbestandteil und einem Metall einer Kupferlegierung, das ein geringeres spezifisches Gewicht als Kupfer hat.

Das erfindungsgemäße metall-keramische Bauteil stellt ein Bauteil dar, das sich durch günstige Eigenschaften hinsichtlich seiner Dichte und damit hinsichtlich seines Gewichts auszeichnet.

Zur Vermeidung hoher thermischer Gradienten bzw. großer thermischer Spannungen, die bei einem tribologisch beanspruchten Bauteil infolge eines hohen Energieeintrags während der Reibbeanspruchung auftreten können, weist das Bauteil vorteilhafterweise eine Wärmeleitfähigkeit λ von mehr als 70 W/mK auf, was durch einen entsprechenden Volumenanteil an Kupfer gewährleistet werden kann. Kupfer hat eine Wärmeleitfähigkeit von 400 W/mK.

Um das metall-keramische Bauteil beim Einsatz als Bremsscheibe mit einer hinreichenden Schadenstoleranz zu versehen, weist das Bauteil vorteilhafterweise eine Bruchzähigkeit größer 10 MPa·m^{1/2}, vorzugsweise größer 15 MPa·m^{1/2} auf.

Die Einstellung der oben genannten Wärmeleitfähigkeit und der genannten Bruchzähigkeit kann bei dem Bauteil nach der Erfindung insbesondere erreicht werden, wenn es einen Kupferanteil zwischen 20 Vol.-% und 45 Vol.-%, vorzugsweise zwischen 25 Vol.-% und 40 Vol.-%, und einen korrespondierenden Keramikanteil zwischen 55 Vol.-% und 80 Vol.-%, vorzugsweise zwischen 60 Vol.-% und 75 Vol.-% aufweist.

Weitere Vorteile und vorteilhafte Ausgestaltungen des Gegenstandes nach der Erfindung sind der Beschreibung und den Patentansprüchen entnehmbar.

Sechs Ausführungsbeispiele des Verfahrens nach der Erfindung sind der nachfolgenden Beschreibung in Zusammenhang mit jeweils korrspondierenden metall-keramischen Bauteilen nach der Erfindung näher erläutert.

### Beschreibung der Ausführungsbeispiele

Bei einer ersten Variante des Verfahrens nach der Erfindung wird zunächst ein poröser keramischer Vorkörper mit der Form einer Bremsscheibe hergestellt, der eine Porosität von etwa 50 Vol.-% aufweist und aus inerten und reaktiven Bestandteilen besteht. Die inerten Bestandteile des Vorköpers sind aus Siliziumcarbid gebildet. Die reaktiven Bestandteile sind aus Titandioxid gebildet. Der keramische Vorkörper ist ein Sinterkörper, der durch Sinterung eines aus einem Pulver gepressten Grünkörpers gebildet wird.

Der gesinterte Vorkörper wird in einer Druckgussform bzw. einer Gießform mit einer Schmelze aus einer CuAl-Legierung befüllt bzw. infiltriert, die einen Aluminiumanteil von 67 Gew.-% aufweist. Die Schmelztemperatur dieser Legierung liegt bei 548 °C. Anschließend wird der mit der Metallschmelze infiltrierte Vorkörper einem gesteuerten Temperprozess ausgesetzt, bei dem das Aluminium mit dem Titandioxid zu Aluminiumoxid und Titanaluminid reagiert. Als Metallphase bleibt hochschmelzendes Kupfer zurück. Dieses füllt einen Porenraum einer keramischen Phase aus, die das Aluminiumoxid und das Titanaluminid umfasst. Das so entstandene Bauteil stellt die fertige Bremsscheibe dar.

Bei einer alternativen Variante des Verfahrens nach der Erfindung wird zunächst ein poröser keramischer Vorkörper hergestellt, der ebenfalls die Form einer Bremsscheibe hat und als reaktiven Bestandteil Aluminiumoxid Al₂O₃ umfasst. Dieser Vorkörper wird in einer Druckgussform mit einer Metallschmelze aus einer niedrigschmelzenden CuMg-Legierung befüllt bzw. infiltriert, die eine eutektische Zusammensetzung hat, wobei der Kupferanteil der Schmelze 90,3 Gew.-% beträgt und der Schmelzpunkt der Legierung bei 722 °C liegt. Das reaktive Magnesium oxidiert während der Infiltration mit dem Aluminiumoxid des keramischen Vorkörpers, so dass eine Umsetzung zu einer aus Spinell MgAl₂O₄ gebildeten Keramikphase erfolgt und als Metallphase des resultierenden, die fertige Bremsscheibe darstellenden Bauteils Kupfer zurückbleibt.

Alternativ kann der keramische Vorkörper als reaktiven Bestandteil Titandioxid TiO₂ umfassen, das mit dem Magnesium der Metallschmelze zu MgTiO₃ umgesetzt wird.

Bei einer weiteren Variante des Verfahrens nach der Erfindung wird zur Fertigung einer Bremsscheibe zunächst ein keramischer Vorkörper hergestellt, der als reaktiven Bestandteil Titandioxid TiO₂, mithin ein keramisches Oxid umfasst.

Der keramische Vorkörper wird in einer Druckgussform mit einer Metallschmelze aus einer CuSi-Legierung infiltriert, deren Siliziumanteil 8 Gew.-% und deren Schmelztemperatur 680 °C beträgt.

Anschließend wird der infiltrierte Vorkörper einer gesteuerten Temperaturbehandlung ausgesetzt, so dass das Silizium der Metallschmelze mit dem keramischen Oxid TiO₂ zu einem Titansilizid, beispielsweise TiSi₂ und/oder Ti₅Si₃, umgesetzt wird. Als Metallphase der ausgefertigten, ein metall-keramisches Bauteil darstellenden Bremsscheibe bleibt im Wesentlichen reines Kupfer zurück.

Bei einer weiteren Variante des Verfahrens nach der Erfindung wird ein keramischer Vorkörper hergestellt, der einen reaktiven Bestandteil umfasst, der gegenüber Zirkonium Zr als Oxidationsmittel wirkt. Der Vorkörper hat ein Porenvolumen von etwa 50 Vol.-%.

Anschließend wird der Vorkörper mit einer Metallschmelze aus einer CuZr-Legierung infiltriert, die eine eutektische Zusammensetzung hat und deren Schmelzpunkt bei 972 °C liegt. Der Anteil an Zirkonium in der Legierung beträgt 11,5 Gew.-%. Mittels der oxidativ wirkenden Verbindung des keramischen Vorkörpers wird das Zirkonium der Metallschmelze zu Zirkoniumdioxid ZrO₂ umgesetzt. Als metallische Phase des fertigen metall-keramischen, beispielsweise eine Bremsscheibe darstellenden Bauteils bleibt Kupfer zurück.

Bei einer weiteren Variante des Verfahrens nach der Erfindung wird zur Fertigung einer Bremsscheibe ein keramischer Vorkörper hergestellt, der einen reaktiven Bestandteil hat, der gegenüber Titan als Oxidationsmittel wirkt. Dieser Vorkörper wird in einer Druckgussform mit einer Metallschmelze aus einer CuTi-Legierung eutektischer Zusammensetzung infiltriert, die einen Titananteil von 25 Atom-% und einen Schmelzpunkt von 885 °C hat. Das Titan der Metallschmelze wird mittels des oxidativ wirkenden Bestandteils des Vorkörpers zu Titandioxid TiO₂ umgesetzt. Zurück bleibt wiederum als Metallphase des fertigen metall-keramischen Bauteils Kupfer.

Die Erfindung ist nicht auf die vorstehend beschriebenen Ausführungsbeispiele und insbesondere nicht auf die Herstellung von Bremsscheiben beschränkt. Vielmehr können eine Vielzahl an keramischen Vorkörpern mit einer dem jeweiligen Anwendungsfall angepassten Form eingesetzt werden, die einen gegenüber einem Legierungsbestandteil reaktiv wirkenden Bestandteil umfassen, so dass bei Infiltration einer Metallschmelze aus einer Legierung aus Kupfer und einem weiteren Metall das weitere Metall zu einer keramischen Phase umgesetzt werden kann und die metallische Phase des fertigen Bauteils im Wesentlichen aus reinem Kupfer besteht.

## Patentansprüche

1. Metall-keramisches Bauteil, insbesondere Bremsscheibe, umfassend eine keramische Phase, die mit einem Porenraum versehen ist, der im Wesentlichen mit reinem Kupfer befüllt ist, wobei die keramische Phase ein Umsetzungsprodukt aus einem reaktiven Keramikanteil und einem Metall einer Kupferlegierung umfasst, das ein geringeres spezifisches Gewicht als Kupfer hat, **dadurch gekennzeichnet, dass** die Kupferlegierung eine CuAl-Legierung, eine CuMg-Legierung, eine CuSi-Legierung, eine CuZr-Legierung oder eine CuTi-Legierung ist, und das Umsetzungsprodukt aus Aluminiumoxid und Titanaluminid, aus MgAl₂O₄ oder MgTiO₃, aus einem Silizid wie TiSi₂ oder Ti₅Si₃, aus Zirkoniumdioxid ZrO₂ oder aus Titandioxid TiO₂ gebildet ist.

2. Metall-keramisches Bauteil nach Anspruch 1, **gekennzeichnet durch** einen Kupferanteil zwischen 20 Vol.-% und 45 Vol.-%, vorzugsweise zwischen 25 Vol.-% und 40 Vol.-%, und einen Keramikanteil zwischen 55 Vol.-% und 80 Vol.-%, vorzugsweise zwischen 60 Vol.-% und 75 Vol.-%.

3. Metall-keramisches Bauteil nach Anspruch 1 und/oder 2, **dadurch gekennzeichnet, dass** der Keramikanteil Partikel und/oder Fasern aus mindestens einem Oxid, mindestens einem Carbid, mindestens einem Nitrid und/oder mindestens einem Borid umfasst.

4. Metall-keramisches Bauteil nach einem der Ansprüche 1 bis 3, **gekennzeichnet durch** eine Bruchzähigkeit größer 10 MPa·m^{1/2}, vorzugsweise größer 15 MPa·m^{1/2}.

5. Metall-keramisches Bauteil nach einem der Ansprüche 1 bis 4, **gekennzeichnet durch** eine Wärmeleitfähigkeit von mehr als 50 W/mK, bevorzugt mehr als 70 W/mK.

6. Verfahren zur Herstellung eines Verbundbauteils nach Anspruch 1, insbesondere einer Bremsscheibe, umfassend folgende Schritte:
- Herstellen eines porösen keramischen Vorkörpers;
- Infiltration bzw. Befüllung des porösen keramischen Vorkörpers mit einer Metallschmelze, wobei
als Metallschmelze eine Legierung aus Kupfer und mindestens einem weiteren Metall eingesetzt wird, wobei das weitere Metall durch eine Reaktion mit mindestens einem reaktiven Bestandteil des Vorkörpers so umgesetzt wird, dass ein Porenraum einer keramischen Phase von im Wesentlichen reinem Kupfer ausgefüllt wird, **dadurch gekennzeichnet, dass** die Metallschmelze bei einer Temperatur infiltriert wird, die niedriger als die Schmelztemperatur von Kupfer ist und vorzugsweise zwischen etwa 680 °C und 1000 °C liegt.

7. Verfahren nach Anspruch 6, **dadurch gekennzeichnet, dass** der mit der Metallschmelze infiltrierte Vorkörper einer gesteuerten Nachtemperung ausgesetzt wird.

8. Verfahren nach Anspruch 6 und/oder 7, **dadurch gekennzeichnet, dass** dem Vorkörper eine Porosität von etwa 50 Vol.-% verliehen wird.

9. Verfahren nach einem der Ansprüche 6 bis 8, **dadurch gekennzeichnet, dass** die reaktiven Bestandteile des Vorkörpers aus mindestens einem Oxid, insbesondere aus TiO₂, Al₂O₃ und/oder ZrO₂, aus mindestens einem Karbid und/oder mindestens einem Nitrid gebildet sind.

10. Verfahren nach einem der Ansprüche 6 bis 9, **dadurch gekennzeichnet, dass** der Vorkörper Bestandteile umfasst, die gegenüber der Metallschmelze inert sind und insbesondere aus Partikeln oder Fasern bestehen, die aus einem Oxid, einem Carbid, einem Nitrid oder einem Borid gebildet sind.

11. Verfahren nach Anspruch 10, **dadurch gekennzeichnet, dass** die inerten Bestandteile des Vorkörpers als Verstärkungs- und/oder Funktionselemente des ausgefertigten Verbundbauteils eingesetzt werden.

## Claims

1. Metal-ceramic component, in particular brake disc, including a ceramic phase which is provided with a pore space substantially filled with pure copper, in which the ceramic phase includes a product of reaction between a reactive ceramic portion and a metal comprising a copper alloy which has a lower specific weight than copper, **characterized in that** the copper alloy is a CuAl alloy, a CuMg alloy, a CuSi alloy, a CuZr alloy or a CuTi alloy, and the reaction product is formed from aluminium oxide and titanium aluminide, MgAl₂O₄ or MgTiO₃, a silicide such as TiSi₂ or Ti₅Si₃, zirconium dioxide ZrO₂ or titanium dioxide TiO₂.

2. Metal-ceramic component according to Claim 1, **characterized by** a copper portion comprising between 20% by volume and 45% by volume, preferably between 25% by volume and 40% by volume, and a ceramic portion comprising between 55% by volume and 80% by volume, preferably between 60% by volume and 75% by volume.

3. Metal-ceramic component according to Claim 1 and/or 2, **characterized in that** the ceramic portion includes particles and/or fibres of at least one oxide, at least one carbide, at least one nitride and/or at least one boride.

4. Metal-ceramic component according to one of Claims 1 to 3, **characterized by** a fracture toughness greater than 10 MPa·m^{1/2}, preferably greater than 15 MPa·m^{1/2}.

5. Metal-ceramic component according to one of Claims 1 to 4, **characterized by** a thermal conductivity of greater than 50 W/mK, preferably greater than 70 W/mK.

6. Method for producing a composite component according to Claim 1, in particular a brake disc, including the following steps:
- making a porous ceramic preform;
- infiltration of into the porous ceramic preform or filling thereof with a molten metal, in which
an alloy of copper and at least one further metal is used as the molten metal, with the further metal being reacted with at least one reactive constituent of the preform such that a pore space of a ceramic phase is filled with substantially pure copper, **characterized in that** the molten metal is introduced at a temperature below the melting point of copper and preferably between approximately 680°C and 1000°C.

7. Method according to Claim 6, **characterized in that** the preform infiltrated with the molten metal is subjected to controlled subsequent annealing.

8. Method according to Claim 6 and/or 7, **characterized in that** the preform is given a porosity of approximately 50% by volume.

9. Method according to one of Claims 6 to 8, **characterized in that** the reactive constituents of the preform are formed by at least one oxide, in particular TiO₂, Al₂O₃ and/or ZrO₂, at least one carbide and/or at least one nitride.

10. Method according to one of Claims 6 to 9, **characterized in that** the preform includes constituents which are inert in relation to the molten metal and in particular comprise particles or fibres which are formed by an oxide, a carbide, a nitride or a boride.

11. Method according to Claim 10, **characterized in that** the inert constituents of the preform are used as strengthening and/or functional elements of the finished composite component.

## Revendications

1. Elément métal-céramique, notamment disque de frein, comprenant une phase céramique pourvue d'un espace poreux rempli essentiellement de cuivre pur, la phase céramique comprenant un produit de réaction entre une proportion de céramique réactive et un métal d'un alliage à base de cuivre ayant un poids spécifique inférieur à celui du cuivre,
**caractérisé en ce que**
l'alliage à base de cuivre est un alliage CuAl, CuMg, CuSi, CuZr ou CuTi, et le produit de réaction est formé à partir de l'oxyde d'aluminium et de l'aluminiure de titane, de MgAl₂O₄ ou MgTiO₃, d'un siliciure tel que TiSi₂ ou Tissais, de dioxyde de zirconium ZrO₂ ou de dioxyde de titane TiO₂.

2. Elément métal-céramique selon la revendication 1,
**caractérisé par**
une proportion de cuivre comprise entre 20 % en volume et 45 % en volume, de préférence entre 25 % en volume et 40 % en volume, et une proportion de céramique comprise entre 55 % en volume et 80 % en volume, de préférence entre 60 % en volume et 75 % en volume.

3. Elément métal-céramique selon la revendication 1 et/ou 2,
**caractérisé en ce que**
la proportion de céramique comprend des particules et/ou des fibres d'au moins un oxyde, d'au moins un carbure, d'au moins un nitrure et/ou d'au moins un borure.

4. Elément métal-céramique selon l'une des revendications 1 à 3,
**caractérisé par**
une résistance à la rupture supérieure à 10 MPa·m^{1/2}, de préférence supérieure à 15 MPa·m^{1/2}.

5. Elément métal-céramique selon l'une des revendications 1 à 4,
**caractérisé par**
une conductibilité thermique supérieure à 50 W /mK, de préférence supérieure à 70 W/mK.

6. Procédé de production d'un élément composite selon la revendication 1, notamment d'un disque de frein, comprenant les étapes suivantes :
- production d'une ébauche céramique poreuse ;
- infiltration ou remplissage de l'ébauche céramique poreuse par un métal fondu, en utilisant comme métal fondu un alliage à base de cuivre et d'au moins un autre métal réagissant avec au moins un constituant réactif de l'ébauche, de sorte qu'un espace poreux d'une phase céramique soit rempli par du cuivre sensiblement pur,
**caractérisé en ce que**
le métal fondu s'infiltre à une température inférieure à la température de fusion du cuivre et comprise de préférence entre environ 680 °C et 1000 °C.

7. Procédé selon la revendication 6,
**caractérisé en ce que**
l'ébauche infiltrée de métal fondu est soumise à un recuit de finition contrôlé.

8. Procédé selon la revendication 6 et/ou 7,
**caractérisé en ce que**
l'ébauche bénéficie d'une porosité d'environ 50 % en volume.

9. Procédé selon l'une des revendications 6 à 8,
**caractérisé en ce que**
les constituants réactifs de l'ébauche sont formés par au moins un oxyde, notamment le TiO₂, Al₂O₃ et/ou ZrO₂, au moins un carbure et/ou au moins un nitrure.

10. Procédé selon l'une des revendications 6 à 9,
**caractérisé en ce que**
l'ébauche comprend des constituants inertes vis-à-vis du métal fondu et constitués notamment par des particules ou des fibres formées par un oxyde, un carbure, un nitrure ou un borure.

11. Procédé selon la revendication 10,
**caractérisé en ce que**
les constituants inertes de l'ébauche sont employés comme éléments de renfort et/ou éléments fonctionnels de l'élément composite élaboré.
